**Europäisches Patentamt**

**European Patent Office**

**Office européen des brevets**

(19)

(11) Numéro de publication : **0 051 033 B1**

(12) **FASCICULE DE BREVET EUROPÉEN**

(45) Date de publication du fascicule du brevet : **22.01.86**

(51) Int. Cl.⁴ : **G 10 K 11/34, G 01 N 29/04**

(21) Numéro de dépôt : **81401688.7**

(22) Date de dépôt : **23.10.81**

(54) **Dispositif de sondage par ultrasons.**

(30) Priorité : **24.10.80 FR 8022880**

(43) Date de publication de la demande :
**05.05.82 Bulletin 82/18**

(45) Mention de la délivrance du brevet :
**22.01.86 Bulletin 86/04**

(84) Etats contractants désignés :
**DE NL**

(56) Documents cités :
**FR-A- 1 163 092**
**FR-A- 2 252 580**
**US-A- 3 311 869**

(73) Titulaire : **Etablissement Public dit: CENTRE NATIO-
NAL DE LA RECHERCHE SCIENTIFIQUE (CNRS)
15, Quai Anatole France
F-75007 Paris (FR)**

(72) Inventeur : **Alais, Pierre
17, rue Champromery
F-78720 Dampierre (FR)**

(74) Mandataire : **Fort, Jacques et al
CABINET PLASSERAUD 84, rue d'Amsterdam
F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne le sondage ultrasonore permettant d'explorer une pièce ou un organe à analyser, notamment, bien que non exclusivement, en profondeur, c'est-à-dire en échographie B.

La demande de brevet FR-A-2 472 753 décrit un dispositif de sondage ultrasonore du type comportant n transducteurs élémentaires répartis à intervalles réguliers, un générateur associé aux transducteurs par l'intermédiaire d'organes permettant de fournir, sur des voies différentes, à partir d'une même impulsion du générateur, des impulsions retardées de temps τ et multiples de τ, des moyens pour mémoriser la répartition sur n transducteurs élémentaires successifs des retards correspondant à une focalisation à une distance déterminée des transducteurs, des moyens destinés à relier un groupe de n transducteurs auxdits organes suivant la répartition sélectionnée par les moyens de mémorisation, et un récepteur associé aux transducteurs.

Le dispositif décrit à titre d'exemple dans ce brevet FR-A-2.472.753 utilise à la réception des moyens commutateurs qui comprennent un multiplexeur (qui est généralement utilisé également à l'émission) associé à chaque transducteur et relié, par une ligne bus commune à a voies sur lesquelles sont interposés des moyens de déphasage, à un circuit sommateur des signaux de réception, chaque multiplexeur comportant une entrée de commande à plusieurs chiffres binaires reliée à un étage respectif d'un registre à décalage associé à une horloge de déplacement de ladite répartition mémorisée le long du registre. Ces moyens de déphasage sont constitués par plusieurs déphaseurs ou lignes à retard distincts.

Les a déphasages peuvent être régulièrement étagés ; mais dans certains cas ils est plus avantageux de prévoir des intervalles différents, par exemple pour tenir compte de la variation de la pente de la courbe représentative de la phase en fonction de la distance au centre du groupe de n transducteurs.

La présente invention vise à fournir un dispositif de sondage ultrasonore du genre ci-dessus défini, qui est simple et autorise pourtant un échantillonnage fin de la phase ou du retard, une focalisation sans lobe secondaire de niveau prohibitif et une focalisation dynamique (dite aussi focalisation poursuite) continue, et non plus simplement par pas discrets comme dans le cas du mode de réalisation décrit dans la demande de brevet FR-A-2.472.753.

Dans ce but, l'invention propose notamment un dispositif du type ci-dessus défini, dans lequel le récepteur associé aux transducteurs comporte une ligne à retard unique à prises multiples, fermée en amont sur une impédance itérative constituée de cellules à retard variable de façon progressive, et dans lequel les transducteurs sont reliés auxdites prises par l'intermédiaire d'amplificateurs tension-courant.

L'emploi de la même ligne à retard à prises multiples à l'émission et à la réception est en soi connu (FR-A-1.163.092), mais en utilisant une disposition qui ne permet de faire varier les retards que par commutation. L'emploi d'une ligne à retard variable pour chaque transducteur en vue de focaliser à la réception est évoqué dans le document FR-A-1.163.092, mais sous une forme telle qu'elle ne peut être dans la pratique réalisée.

La ligne à retard peut être constituée de cellules LC identiques reliées les unes aux autres, comportant chacune un élément d'impédance réglable. Cet élément d'impédance réglable est constitué par exemple par une diode VARICAP. Les diodes de toutes les cellules reçoivent alors la même tension de commande. Pour que la ligne à retard reste fermée dans tous les cas sur son impédance itérative, on peut boucler la ligne, en amont, sur une série de cellules LC comportant chacune une diode VARICAP. Toutes les diodes sont alors polarisées par une ligne à laquelle est appliquée, à l'extrémité amont, une tension fixe et, à l'extrémité aval, la tension de commande des diodes VARICAP. Un pont de résistances est placé sur les cellules constituant l'impédance itérative de façon à assurer l'échelonnement correct des tensions sur les diodes VARICAP et l'impédance itérative.

La distance de focalisation peut être commandée manuellement en agissant sur un générateur de tension de commande : on peut ainsi examiner en profondeur un milieu en focalisant, à la réception, sur la zone intéressante. On peut également prévoir dans le dispositif un générateur de tension de commande qui, au cours d'une séquence de tirs successifs comportant un nombre de tirs déterminés, modifie à chaque fois la distance de focalisation de façon à fournir une exploration en profondeur qui peut être affichée globalement sur un dispositif de visualisation, tel qu'un tube à écran cathodique.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels :

la figure 1 est un diagramme montrant la répartition des retards à croissance parabolique à réaliser sur des transducteurs répartis à intervalles réguliers suivant une direction Ox pour assurer la focalisation à une distance déterminée $Y_1$ ;

la figure 1a similaire à la fig. 1, montre la répartition des retards constants à réaliser pour atteindre le même résultat ;

la figure 2 montre une disposition possible de n transducteurs élémentaires, permettant de mettre en œuvre l'invention ;

la figure 3 est un schéma de principe d'un circuit permettant de mettre en œuvre l'invention sans balayage électronique ;

la figure 4 montre un mode particulier de réalisation de la ligne à retard utilisable dans le circuit de la fig. 3 ;

la figure 5 montre une constitution possible de la ligne à retard de la fig. 4, permettant d'effectuer une focalisation dynamique à la réception ;

la figure 6 est un schéma illustrant le principe d'une focalisation dynamique en contrôle non destructif ;

la figure 7 montre une répartition possible des transducteurs élémentaires pour le contrôle non destructif ;

la figure 8 similaire à la fig. 3, est un schéma montrant un dispositif à balayage électronique.

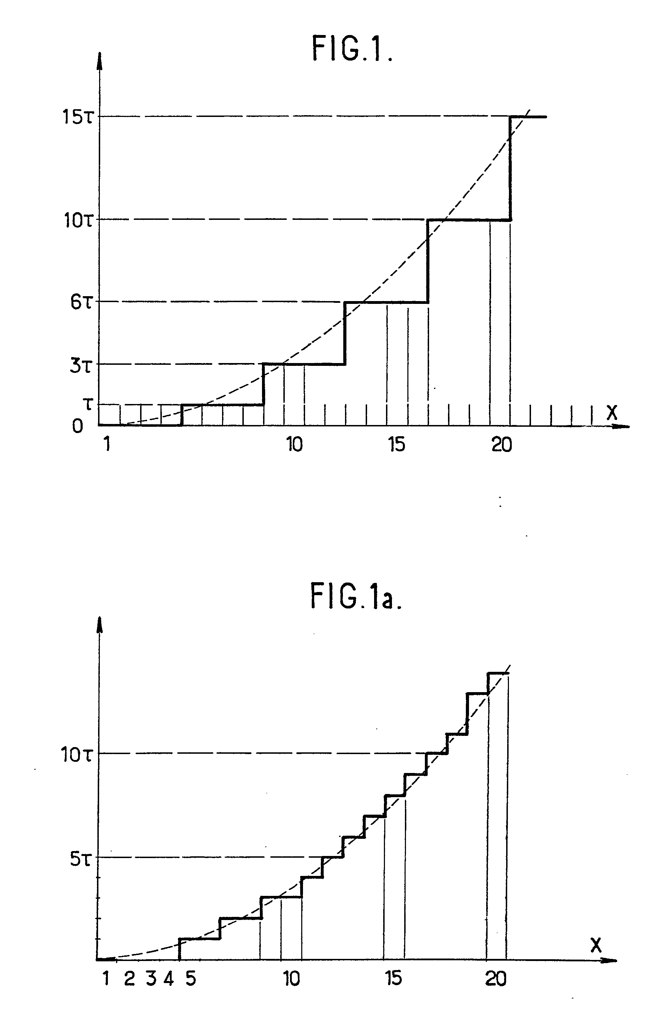

Comme l'indique déjà la demande de brevet FR-A-2 472 753, on peut réaliser une focalisation à l'émission ou à la réception au droit d'un groupe de n transducteurs répartis suivant une direction Ox à une distance y du segment de droite sur lequel sont répartis les n transducteurs élémentaires, en utilisant une répartition de phase entre les transducteurs qui simule la variation de déphasage $\phi$ en fonction de l'abscisse x à partir du centre O. La courbe en tirets de la figure 1 montre la répartition théorique de la phase à réaliser. On peut approcher la relation théorique en effectuant un échantillonnage de la phase à a niveaux, a étant un nombre entier, et en affectant à chacun des n transducteurs la phase la plus proche modulo $2\pi$ de la valeur de la phase atteinte par la loi de variation de $\phi$ en fonction de x.

Toutefois, pour réduire les lobes latéraux du diagramme d'émission ou de réception, il est plus avantageux d'affecter aux transducteurs élémentaires des retards échelonnés de façon à simuler la loi de variation de $\phi$ en fonction de x. Cette loi étant elle-même parabolique, une première solution consiste à effectuer un échantillonnage à plusieurs niveaux de retard, les retards successifs étant échantillonnés suivant une loi parabolique. Si les transducteurs élémentaires sont alors répartis régulièrement, chacun des retards sera appliqué à un nombre égal de transducteurs qui peut se réduire d'ailleurs à un seul transducteur. La figure 1 montre en trait plein une telle répartition des retards successifs, chaque fois appliqués à quatre transducteurs élémentaires.

Dans la variante montrée en figure 1a, les retards sont au contraire échantillonnés à intervalle constant, mais le nombre des transducteurs n'est pas le même pour tous les retards. Ce nombre peut même être nul pour certains retards (retard de 12 $\tau$ sur la figure 1a), lorsque la pente de la courbe de variation atteint une pente telle qu'un seul transducteur ne suffit pas à un accroissement d'un intervalle de temps $\tau$.

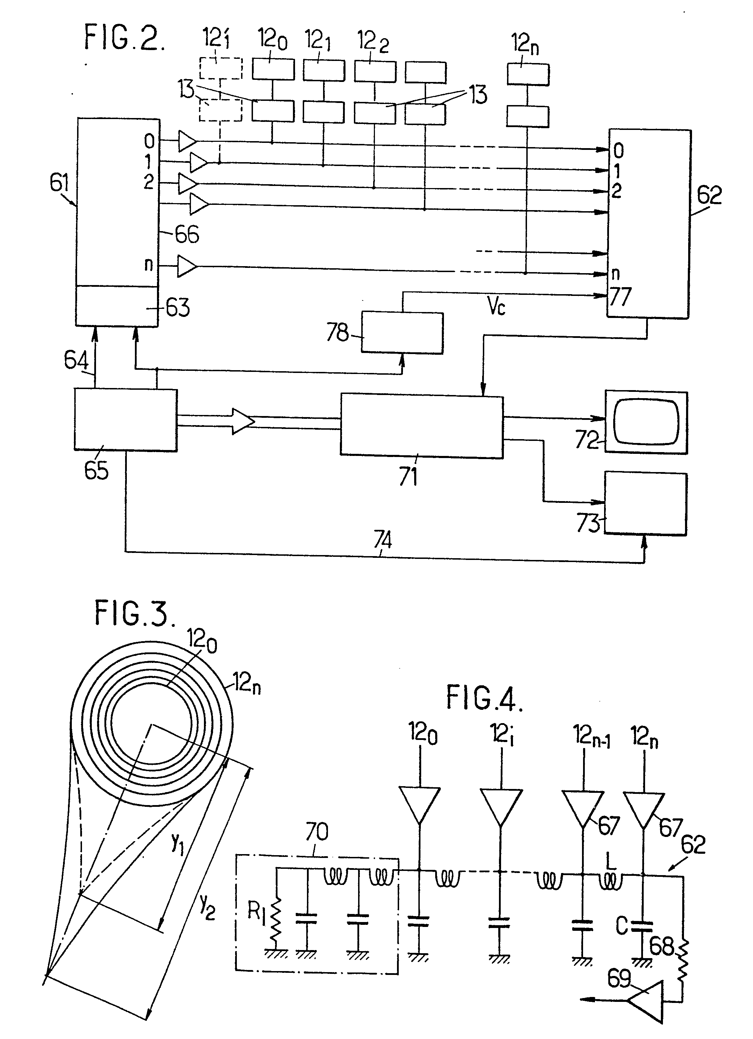

Le circuit électronique montré schématiquement en figure 2 est destiné à permettre une approximation de la courbe de Fresnel par emploi de retards échantillonnés suivant une loi parabolique. Cette simulation est celle montrée en figure 1, si ce n'est qu'à chaque transducteur élémentaire est affecté un retard particulier.

Le circuit montré en figure 2 est associé à un système de n transducteurs $12_0$, $12_1$, ..., $12_n$ excitables par impulsions. Les transducteurs élémentaires peuvent être de forme annulaire, comme indiqué sur la figure 3. Ils peuvent également être répartis suivant une barrette linéaire, comme dans le cas illustré en figure 2 de la demande de brevet FR-A-2 292 978, auquel cas le même retard sera affecté à deux transducteurs tels que $12_1$ et $12'_1$ placés symétriquement par rapport à un transducteur central $12_0$.

Les transducteurs élémentaires sont reliés, par des circuits d'excitation et d'amplification respectifs 13 qui seront décrits plus loin, aux n voies d'une ligne bus 60 qui relie un générateur 61 à un récepteur 62. Le générateur comporte une horloge 63 munie d'une entrée 64 de déclenchement reliée à une carte pilote 65, pouvant incorporer un microprocesseur. Le générateur 61 comporte également un registre à décalage 66 dont n sorties sont reliées aux voies de la ligne bus 60 par l'intermédiaire d'amplificateurs de formation. L'horloge 63 est prévue pour fournir, pour chaque séquence complète de fonctionnement, en réponse au signal de déclenchement qui lui est appliqué sur l'entrée 64, un signal de commande destiné à transiter dans le registre 66, puis des impulsions courtes de circulation du signal de commande dans le registre 66. Les positions du registre 66 qui sont reliées aux voies n, ..., 2, 1, 0 du registre 66 sont choisies de façon à correspondre à des retards 0, $\tau$, $3\tau$, $6\tau$, ... de façon à correspondre à la répartition de la figure 1 et donc à une focalisation à une distance déterminée, qui sera par exemple la distance $y_1$ de la figure 3. Cette répartition parabolique peut être remplacée par une répartition linéaire 0, $\tau$, ...

Le récepteur 62 utilise une ligne à retard unique à prises multiples. Ce récepteur peut avoir la constitution de principe montrée en figure 4. Ce récepteur comporte une ligne à retard constituée de cellules toutes identiques, du type LC. Chacune des voies de la ligne bus 60 attaque la ligne par l'intermédiaire d'un amplificateur tension-courant 67. Une seule cellule, fournissant le retard élémentaire $\tau$, est interposée entre les points de raccordement des amplificateurs provenant des voies d'ordre n et n − 1. Le nombre de cellules augmente ensuite linéairement : on réalise ainsi en effet une croissance parabolique, puisque la dérivée de la fonction $x^2$ est égale à 2 x. La ligne à retard attaque ensuite, par l'intermédiaire d'une résistance 68, un amplificateur courant-tension 69 qui constitue l'organe de sortie du récepteur 62.

La ligne à retard doit se terminer en amont sur son impédance itérative, pour éviter que les signaux injectés à chaque branchement d'un transducteur élémentaire et se propageant vers l'amont ne se réfléchissent à cette extrémité amont. Cette adaptation s'effectue en bouclant la ligne sur une cellule 70 comportant des réseaux LC et une résistance $R_l$ dont la valeur est :

$$R_l = \sqrt{L/C}$$

Par contre, il n'est pas nécessaire de réaliser une telle adaptation à l'aval de la ligne, les réflexions éventuelles ne pouvant provoquer d'erreur sur le signal reçu.

Le signal de sortie du récepteur 62 est appliqué à un circuit complexe 71 qui peut comporter des circuits de compression logarithmique, de détection, de numérisation et/ou de mémorisation. Un dispositif de visualisation, typiquement comportant un tube à écran cathodique 72, permet d'afficher le résultat. Lorsque le circuit 71 doit effectuer une mémorisation, les adresses lui parviendront de la carte 65, éventuellement à microprocesseur.

L'affichage peut être complété par un oscilloscope 73 qui reçoit des signaux à la fréquence de récurrence de tir de la carte pilote 65 par la ligne 74.

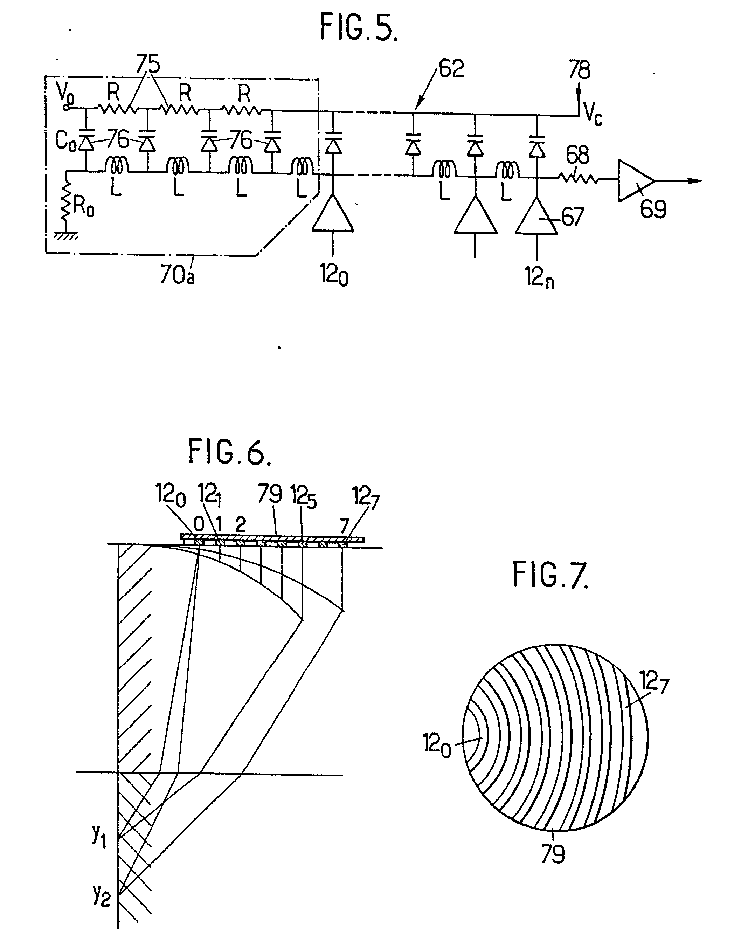

On peut, à l'aide du dispositif qui vient d'être décrit, réaliser une focalisation poursuite en utilisant une ligne à retard 62 dont les cellules ont des caractéristiques modifiables de façon progressive et continue, à l'aide d'une commande électronique ayant la constitution montrée en figure 5.

Dans le mode de réalisation représenté en figure 5, ce résultat est atteint en utilisant des capacités qui ne sont pas de valeur constante, mais de valeur modifiable pour toutes les capacités à la fois. Pour cela, on peut constituer ces capacités par des éléments à commande par tension. En particulier, il peut s'agir de diodes « VARICAP » dont la capacité est fonction d'une tension de commande $V_c$. Certaines diodes VARICAP disponibles dans le commerce ont une capacité qui varie dans un rapport de 1 à 10, ce qui se traduit par une variation relative du retard $\tau$ dans un rapport de 1 à 3 environ. L'interposition d'amplificateurs tension-courant, constituant injecteurs de courant, entre les transducteurs et les prises de la ligne, est alors essentielle pour éviter les modifications de caractéristiques de la ligne que procurerait sa charge.

Dans le mode de réalisation montré en figure 5, la ligne d'inductances L est polarisée à une tension continue constante par l'intermédiaire d'une résistance $R_0$. Les diodes sont placées entre la ligne portée à la tension de commande $V_c$ et la tension de référence constante.

Il faut encore que la ligne à retard soit bouclée sur son impédance itérative. Or celle-ci est variable en fonction de la valeur variable des capacités : elle doit donc varier en fonction de $V_c$.

Le problème est résolu de façon simple, dans la ligne à retard de la figure 5, en prévoyant une branche adaptative amont 70a comportant un pont de résistances 75 de valeur R assurant une variation linéaire de tension de la valeur $V_c$ de la tension de commande à la valeur fixe $V_0$. A chaque résistance 75 est affectée une cellule comportant une inductance L et une diode « VARICAP » 76. On constate expérimentalement que l'évolution progressive des caractéristiques de la branche adaptative amont 70a depuis les caractéristiques variables imposées par $V_c$

jusqu'à la caractéristique constante imposée par $V_0$ (et qui donne à la dernière diode « VARICAP » une capacité $C_0$) permet de réaliser une adaptation convenable sur la résistance $R_0 = \sqrt{L/C_0}$ non seulement lorsque $V_c = V_0$, mais aussi pour une large plage de variation.

Grâce à cette disposition, on peut faire varier le retard élémentaire dans une proportion qui va typiquement de 1 à 3, ce qui permet une focalisation poursuite dans une zone comprise entre la distance $y_1$ et la distance $y_2$ (figure 3) telle que $y_2/y_1 = 3$. En tomographie médicale, on pourra par exemple adopter une zone utile allant de $y_2 = 30$ mm à $y_1 = 100$ mm.

Pour effectuer cette focalisation poursuite de façon automatique, le dispositif de la figure 2 comporte un générateur de commande 76 dont l'entrée de commande est reliée à la carte pilote 65. Au cours d'une séquence complète de fonctionnement, la carte pilote 65 fournit alors au générateur 76 des impulsions successives qui se traduisent par la fourniture d'une tension $V_c$ de valeur croissante à une entrée analogique 77 du récepteur 62.

Au lieu d'utiliser des retards croissant de façon linéaire, c'est-à-dire une répartition du genre montré en figure 1, on peut utiliser les retards constants, mais en affectant un nombre variable de transducteurs à chaque retard, ce qui peut être fait de façon simple grâce à l'emploi d'une ligne bus.

Le dispositif montré en figure 2 est susceptible de nombreuses applications, parmi lesquelles on peut citer le contrôle non destructif de pièces. Les figures 6 et 7 montrent, à titre d'exemple, l'application du dispositif de la figure 2 au contrôle non destructif, à l'aide d'une sonde excentrée 79 comportant plusieurs transducteurs élémentaires en forme de fragments d'anneau. Le balayage peut s'effectuer alors d'une distance $y_2$ à une distance $y_1$ suivant un axe de tir. Pour éviter d'avoir une ouverture trop élevée lorsque la focalisation est à faible distance, il est possible de réduire le nombre des transducteurs élémentaires qui sont alors utilisés, par exemple de 7 à 5 (figure 6). La tension de commande peut être commandée manuellement ou automatiquement.

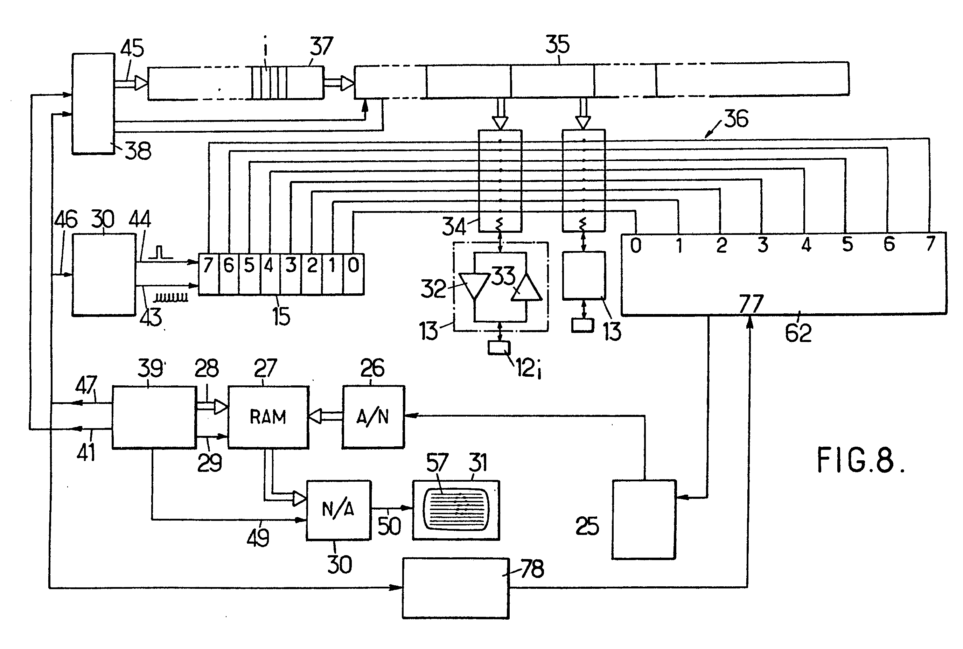

Le dispositif montré schématiquement en figure 2 permet une focalisation poursuite, mais n'est pas prévu pour effectuer un balayage électronique. Mais le dispositif suivant l'invention peut comporter les organes nécessaires à un balayage électronique et en même temps autoriser une focalisation poursuite continue et non plus par pas discrets. Le dispositif peut alors avoir la constitution représentée schématiquement en figure 8, où les organes déjà décrits dans la demande de brevet FR-A-2 472 753 portent le même numéro de référence.

Le circuit ne sera que sommairement décrit, puisque référence peut être faite, pour une compréhension complète, à la demande de brevet français FR-A-2 472 753. Le circuit électronique montré schématiquement en figure 8, sur lequel est représenté un seul transducteur élé-

mentaire $12_i$ et son circuit amplificateur-récepteur associé 13, est destiné à permettre une approximation de la courbe de Fresnel par emploi de huit retards, une réception utilisant n transducteurs élémentaires avec focalisation dynamique continue.

Le circuit de la figure 8 devra provoquer l'excitation de n transducteurs $12_i$ avec une répartition de retards déterminée. Pour réaliser la répartition montrée en figure 1a, le circuit appliquera par exemple le signal d'excitation avec retard maximum aux transducteurs d'ordre 1, 2, 3, 4 ; il provoquera un retard inférieur de T/8 (T étant la période) du signal appliqué aux transducteurs d'ordre 5 et 6 et ainsi de suite.

Le circuit montré en figure 8 est prévu pour être associé à un système de N transducteurs $12_1$, ..., $12_i$, ..., $12_N$, excitables par impulsion. Le circuit d'excitation et d'amplification 13 associé à chaque transducteur $12_i$ comprend un amplificateur non linéaire 32 à seuil capable de délivrer le signal élevé d'émission nécessaire à partir d'une commande logique, bouclé par un amplificateur linéaire protégé 33 véhiculant en retour les signaux de réception et dont la sortie est limitée en amplitude pour interdire toute oscillation propre de la boucle ainsi réalisée.

Au circuit 13 de chaque transducteur 12 sont associés des moyens commutateurs qui n'ont plus à transiter que des signaux faibles, typiquement de 5 Volts au plus à l'émission, de l'ordre de 100 mV à la réception. Ils peuvent être réalisés simplement par exemple à partir d'un multiplexeur analogique 34 à a voies. Dans le cas illustré où a = 8, on peut utiliser des multiplexeurs en MOS complémentaires ou C-MOS de faible prix, par exemple de type CD 4051, qui ne peuvent véhiculer que des signaux logiques, alors que l'amplitude de l'oscillation de tension au niveau du transducteur, typiquement céramique, peut dépasser 100 V à l'émission.

Tous les multiplexeurs 34 sont disposés sur une même ligne bus 36 à a voies (huit voies dans le mode de réalisation illustré) et sont commandés par un registre à décalage 35. La commande par le registre doit permettre de relier chaque transducteur à l'une quelconque des huit voies, marquées 0, 1, ..., 7 sur la figure 8, de la ligne bus 36 ou d'isoler ce transducteur. En conséquence, chaque multiplexeur 34 doit être commandé par un mot de quatre bits, trois pour la sélection de la voie, et un pour isoler le transducteur ou le relier.

A la mémoire morte 37 est associée une horloge 38 qui transfère en séquence les mots de quatre bits de la mémoire morte 37 dans le registre 35. Le transfert des quatre bits d'un même mot s'effectue simultanément à réception d'un signal transmis par l'horloge sur quatre voies 45. L'horloge 38 attaque en même temps l'entrée d'horloge H du registre 35. Comme déjà décrit dans le certificat d'addition FR-A-2 355 288, le passage d'une configuration correspondant à l'émission à une configuration de réception peut s'effectuer en réponse à un coup d'horloge 38 qui actionne tout à la fois la mémoire 37 par 45 et le registre 35. Le passage d'une ligne de tir à la ligne de tir suivante, décalée d'une distance correspondant à l'écartement de deux transducteurs, s'effectue en un nombre de coups de l'horloge 38 égal à celui nécessaire pour tous les tirs aux diverses profondeurs de focalisation.

La partie « émission » du circuit utilise le fait que l'avance de phase est équivalente à une avance temporelle, un écart de phase de 2 $\pi$/8 correspondant à un décalage temporel égal à T/8, T étant la période des ultrasons émis.

Cette partie « émission » comprend une carte 30 comprenant une horloge, comportant une entrée de déclenchement 46 et deux sorties 43 et 44. La sortie 44 est prévue pour fournir un signal de commande destiné à transiter dans un registre 15 à huit positions binaires, associées chacune à l'une des voies 0 à 7 de la ligne bus 36. La carte 30 est prévue pour fournir sur sa sortie 43, en réponse au signal de déclenchement appliqué sur l'entrée 46, une séquence de huit impulsions courtes, de l'ordre de 1 micro-seconde par exemple, à une fréquence égale à huit fois la fréquence nominale des signaux ultra-sonores.

Les horloges 38 et 30 sont reliées à une carte pilote 39 qui assure le séquencement de l'ensemble du fonctionnement. Cette carte est prévue pour émettre, sur une sortie 41, un signal de commande de l'horloge 38 au début de chaque séquence complète de fonctionnement. Ce signal sera dit de « synchronisation trame ». La carte 39 émet par ailleurs, sur une autre sortie 47, un signal, qu'on appellera de « synchronisation ligne » appliqué aux horloges 38 et 30.

Le récepteur 62 du circuit de la figure 8 peut être identique à celui montré en figure 5 et ne sera donc pas décrit de nouveau.

Le signal fourni par le récepteur 62 subit ensuite un traitement classique de compression logarithmique, de détection et de correction de gain en profondeur, dans un circuit complexe de type classique 25. Le circuit 25 reçoit, sur une entrée de commande 48, le signal de synchronisation de ligne provenant du pilote 39. La sortie du circuit 25 est reliée à un convertisseur analogique-numérique 26 dont la sortie, par exemple à quatre bits permettant d'avoir une quantification à seize niveaux, attaque une mémoire numérique adressable à lecture-écriture 27, de capacité suffisante pour pouvoir stocker une image complète. Cette mémoire 27 est également munie d'une entrée 28 d'adressage par le pilote 39 et d'une entrée d'ordre d'écriture 29. Elle sera généralement constituée à partir de mémoires RAM dont le cycle de lecture peut être adressé et commandé indépendamment du cycle d'écriture. Dans le cas de N = 160 transducteurs, la mémoire 27 devra alors avoir une capacité d'au moins 2,5 × 160 mots de quatre bits et permettra de lire les données mémorisées suivant un standard ligne-trame permettant d'attaquer un moniteur video classique 31, à balayage de télévision, ou un magnétoscope permettant l'enregistrement et l'archivage des vues. La lecture est effectuée en permanence par un circuit 30 comportant un convertisseur numérique-analogique et un circuit de synchronisation qui reçoit les signaux de synchronisation ligne et trame du pilote 39 sur une entrée 49 et fournit un signal video composite sur la sortie 50.

## Revendications

1. Dispositif de sondage ultrasonore comportant n transducteurs élémentaires (12) répartis à intervalles réguliers, un générateur associé aux transducteurs par l'intermédiaire d'organes (15, 66) permettant de fournir, sur des voies différentes, à partir d'une même impulsion du générateur, des impulsions retardées de temps τ et multiples de τ, des moyens pour mémoriser la répartition sur n transducteurs élémentaires successifs des retards correspondant à une focalisation à une distance déterminée des transducteurs, des moyens destinés à relier un groupe de n transducteurs auxdits organes suivant la répartition sélectionnée par les moyens de mémorisation, et un récepteur (62) associé aux transducteurs (12), caractérisé en ce que le récepteur (62) comporte une ligne à retard unique à prises multiples fermée en amont sur une impédance itérative (70, 70a) constituée de cellules à retard variable de façon progressive, et en ce que les transducteurs (12) sont reliés auxdites prises par l'intermédiaire d'amplificateurs tension-courant.

2. Dispositif suivant la revendication 1, caractérisé en ce que la ligne à retard est constituée de cellules LC, et en ce que les prises correspondent à des retards à croissance parabolique, chaque prise étant affectée à un groupe de transducteurs comportant le même nombre de transducteurs.

3. Dispositif suivant la revendication 1, caractérisé en ce que la ligne à retard est constituée de cellules LC identiques, les prises étant séparées par un nombre égal de cellules.

4. Dispositif suivant la revendication 2 ou 3 à focalisation dynamique, caractérisé en ce que la capacité de chaque cellule est constituée par un élément à capacité réglable par une tension de commande.

5. Dispositif suivant la revendication 4, caractérisé en ce que ledit élément est constitué par une diode VARICAP.

6. Dispositif suivant la revendication 5, caractérisé en ce que la ligne à retard est fermée en amont sur une impédance itérative (70, 70a) constituée par des cellules LC, l'ensemble des cellules étant polarisées par une ligne à laquelle est appliquée, à l'extrémité amont, une tension fixe et, à l'extrémité aval, la tension de commande, un pont de résistance étant placé sur les cellules constituant l'impédance itérative.

7. Dispositif suivant la revendication 4, 5 ou 6, caractérisé en ce qu'il comporte un générateur de tension de commande (78) dont la tension de sortie est réglable manuellement ou automatiquement en réponse aux signaux fournis par une carte pilote (65 ou 30).

## Claims

1. Ultrasonic probing device comprising n elementary transducers (12) spaced apart at even intervals, a generator associated with the transducers via elements (15, 66) for supplying, on different channels, from a same pulse of the generator, pulses delayed by time τ and multiples of τ, means for storing the distribution over n successive elementary transducers of the time delays corresponding to focusing at a predetermined distance from the transducers, means for connecting a group of n transducers to said elements depending on the distribution selected by the storage means, and a receiver (62) associated with the transducers (12), characterized in that the receiver (62) comprises a single delay line with multiple taps closed upstream across an iterative impedance (70, 70a) formed from progressively variable delay cells, and in that the transducers (12) are connected to said taps through voltage-current amplifiers.

2. Device according to claim 1, characterized in that the delay line is formed from identical LC cells and in that the taps correspond to parabolic growth delays, each tap being assigned to a group of transducers comprising the same number of transducers.

3. Device according to claim 1, characterized in that the delay line is formed from identical LC cells, the taps being separated by an equal number of cells.

4. Device according to claim 2 or 3 with dynamic focusing, characterized in that the capacitance of each cell is formed by an element whose capacitance is adjustable by means of a control voltage.

5. Device according to claim 4, characterized in that said element consists of a VARICAP diode.

6. Device according to claim 5, characterized in that the delay line is closed upstream across an iterative impedance (70, 70a) formed by LC cells, all cells being biassed by a line to the upstream end of which is applied a fixed voltage and to the downstream end the control voltage, a resistor bridge being placed on the cells forming the iterative impedance.

7. Device according to claim 4, 5 or 6, characterized in that it comprises a control voltage generator (78) whose output voltage is adjustable manually or automatically in response to signals delivered by a pilot circuit board (65 or 30).

## Patentansprüche

1. Vorrichtung zur Ultraschallabtastung, bestehend aus n in gleichmäßigen Abständen verteilten Grundübertragungsgliedern (12), einem Generator, der mit den Übertragungsgliedern über Organe (15, 66) in Verbindung steht, die es ermöglichen, über verschiedene Wege, ausgehend von einem selben Generatorimpuls, Verzögerungsimpulse der Zeit τ und Vielfachen von τ zu liefern, Mitteln zur Speicherung der Verteilung der Verzögerungen auf n aufeinanderfolgende Grundübertragungsglieder, wobei die Verzögerungen mit einer Bündelung in einer bestimmten Distanz von den Übertragungsgliedern korrespondieren, Mitteln, um eine Gruppe von n Übertragungsgliedern mit den Organgen entsprechend der durch die Speichermittel ausgewählten Verteilung zu verbinden und einem mit den Übertragungsgliedern (12) in Verbindung stehenden Empfänger (62), dadurch gekennzeichnet, daß der Empfänger (62) eine einzige Verzögerungsleitung zu Mehrfachanschlüssen enthält, die in der dem Stromfluß entgegengesetzten Richtung über einen Kettenwiderstand (70, 70a), gebildet aus Zellen für variable Verzögerungen progressiver Art, abgeschlossen ist, und daß die Übertragungsglieder (12) mit den Anschlüssen über Spannungs-Strom Verstärker verbunden sind.

2. Vorrichtung nach Anspruch 1, dadurch gekennzeichnet, daß die Verzörgerungsleitung aus LC-Zellen gebildet ist und daß die Anschlüsse mit Verzögerungen parabolischen Verlaufs übereinstimmen, wobei jeder Anschluß für eine Gruppe von Übertragungsgliedern, die aus der selben Anzahl von Übertragungsgliedern besteht, bestimmt ist.

3. Vorrichtung nach Anspruch 1, dadurch gekennzeichnet, daß die Verzögerungsleitung aus identischen LC-Zellen gebildet ist, wobei die Anschlüsse durch eine gleiche Anzahl von Zellen getrennt sind.

4. Vorrichtung nach Anspruch 2 oder 3 zur dynamischen Bündelung, dadurch gekennzeichnet, daß die Kapazität jeder Zelle durch ein Element mit durch eine Steuerungsspannung regelbarer Kapazität gebildet ist.

5. Vorrichtung nach Anspruch 4, dadurch gekennzeichnet, daß das Element durch eine Diode VARICAP gebildet ist.

6. Vorrichtung nach Anspruch 5, dadurch gekennzeichnet, daß die Verzögerungsleitung in der dem Stromfluß entgegengesetzter Richtung über einen aus LC-Zellen gebildeten Kettenwiderstand (70, 70a) abgeschlossen ist, wobei das Ensemble der Zellen durch eine Leitung polarisiert ist, an die im äußeren, dem Stromfluß abgewandten Bereich eine konstante Spannung und im äußeren Bereich in Richtung des Stromflusses eine Steuerspannung angelegt ist und wobei eine Widerstandsbrücke über den den Kettenwiderstand bildenden Zellen angeordnet ist.

7. Vorrichtung nach Anspruch 4, 5 oder 6, dadurch gekennzeichnet, daß sie einen Steuerspannungsgenerator (78) enthält, dessen Ausgangsspannung manuell oder automatisch in Abhängigkeit von durch eine Pilotkarte (65 oder 30) gelieferten Signalen regelbar ist.

# FIG.1.

# FIG.1a.

FIG.2.

FIG.3.

FIG.4.

# FIG.5.

# FIG.6.

# FIG.7.

FIG.8.